**Europäisches Patentamt**

**European Patent Office**

**Office européen des brevets**

(19)

(11) Numéro de publication : **0 477 074 A1**

(12) # DEMANDE DE BREVET EUROPEEN

(21) Numéro de dépôt : **91402440.1**

(22) Date de dépôt : **13.09.91**

(51) Int. Cl.⁵ : **F16D 3/20**

(30) Priorité : **21.09.90 FR 9011673**

(43) Date de publication de la demande :
**25.03.92 Bulletin 92/13**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Orain Michel**
**10 rue des Côtes de Vannes**
**F-78700 Conflans-Sainte-Honorine (FR)**

(74) Mandataire : **Kohn, Philippe et al**
**c/o CABINET LAVOIX 2, place d'Estienne**
**d'Orves**
**F-75441 Paris Cédex 09 (FR)**

(54) **Joint de transmission articulé télescopique et procédés pour réaliser un élément à pistes de coulissement notamment pour un tel joint.**

(57) Le joint comprend un tripode (1) muni de trois tourillons sphériques (41, 42, 43) et un barillet (6) avec six pistes intérieures cylindriques (7). Des éléments intermédiaires (10) comportent une surface cylindrique (11) complémentaire du tourillon sphérique (41) et une surface (12) de profil circulaire complémentaire du profil circulaire des pistes (7).

Les éléments intermédiaires sont des patins dont la surface à profil circulaire (12) est une surface cylindrique appuyée en permanence, de manière glissante, dans les pistes (7). Les pistes (7) sont définies par des fourrures (19) en feuillard poli glacé maintenu en place par son élasticité propre sur des avant-pistes (18) d'un corps (13) du barillet (6), ou plaqué adhérant sur le corps du barillet lors du moulage de ce dernier.

Utilisation pour réduire les pressions de contact, accroître la course télescopique, simplifier la forme des éléments intermédiaires, permettre leur réalisation en matière de dureté modérée, et rendre la fabrication du barillet particulièrement économique.

**EP 0 477 074 A1**

FIG. 1

La présente invention concerne un joint de transmission articulé télescopique comprenant un élément à pistes de coulissement, en particulier pour l'automobile.

La présente invention concerne également des procédés pour réaliser un tel élément à pistes de coulissement.

On connaît d'après le FR-A- 2 607 883 un joint de transmission homocinétique comprenant un tripode, muni de trois bras disposés sensiblement radialement par rapport à son axe et partiellement entourés chacun par deux segments de galet dont les faces radialement extérieures, de profil transversal courbe, sont en contact de roulement avec des pistes longitudinales formées sur la face intérieure d'un élément creux, de forme générale cylindrique, ou "barillet" entourant le tripode.

Les FR-A- 2 607 883 et 2 622 653 enseignent en outre, à titre de perfectionnement, de prolonger la surface torique de roulement des segments de galet, à chacune de ses extrémités circonférentielles, par une surface cylindrique tangente ayant même profil transversal que la surface torique. En fin de rotation, cette surface cylindrique vient prendre appui et glisser sur le chemin de roulement qu'elle épouse. Ceci augmente la course utile d'extension et contraction du joint.

Ces joints connus ont des qualités mécaniques remarquables. Le roulement sans glissement dans les pistes longitudinales du barillet supprime les frottements, tandis que la combinaison tourillonnement/oscillation entre portées sphériques des segments de galet et des bras du tripode constitue un mouvement sans point d'arrêt très favorable à la lubrification hydrodynamique et à l'autopolissage des surfaces.

Cependant, les surfaces de roulement, c'est-à-dire la surface extérieure torique de chaque segment et la piste longitudinale correspondante du barillet sont en contact de Hertz, c'est-à-dire un contact théoriquement le long d'une ligne et pratiquement selon une petite surface adjacente à cette ligne, sous une pression très élevée due à la charge à transmettre. Ceci nécessite que ces surfaces soient très dures sur une certaine profondeur. Les pistes peuvent par exemple être soumises à une pression de surface ou pression de Hertz, de l'ordre de 200 à 400 Kg/mm², accompagnée d'une contrainte de cisaillement concomitante répétée atteignant environ 100 Kg/mm² à 1 mm de profondeur.

Par ailleurs, la demande de brevet français 89 15 105 déposée le 17 Novembre 1989 décrit un joint de transmission articulé télescopique qui diffère du joint selon le FR-A- 2 607 883 en ce que la surface torique des patins est remplacée par une surface cylindrique qui est appuyée de manière permanente et glissante sur les pistes longitudinales de l'un des éléments du joint.

Ainsi, la pression d'appui des patins sur les pistes est considérablement diminuée, puisqu'elle n'est plus usuellement que de 0,5 à 2 Kg/mm².

Avec de telles valeurs de pression, on peut a priori envisager de réduire considérablement le coût de fabrication de l'élément à pistes longitudinales en utilisant des matériaux faciles à mettre en oeuvre tels que l'acier doux embouti dans la tôle ou encore extrudé à partir d'un profilé cylindrique et non traité après extrusion. On peut encore envisager les éléments coulés en fonte à base de fer ou d'aluminium ou encore moulé en matière plastique renforcée ou non, ou encore l'utilisation des matériaux composites etc...

Il demeure toutefois le problème que les pistes de l'élément à pistes longitudinales doivent présenter une géométrie excellente et surtout un état de surface de type poli ou "glacé" afin de permettre dès la mise en service du joint, c'est-à-dire avant tout rodage, la lubrification hydrodynamique indispensable au glissement sans retenue des patins sur la surface des pistes, ces patins présentant de leur côté des surfaces sphériques et cylindriques polies et relativement adaptables par suite du matériau constitutif et du procédé de réalisation choisis, par exemple le nylon moulé.

Or l'état de surface "glacé" des patins est gratuit de par leur mode de fabrication et la matière utilisée, mais par contre la rectification et le polissage des pistes, compte tenu de leur longueur et de leur mauvaise accessibilité, s'avèrent onéreux. On pourrait songer à réaliser l'élément à pistes également en matière plastique, mais le glissement matière plastique sur matière plastique serait désavantageux, en raison notamment de la mauvaise conductibilité thermique et de la mauvaise tenue à chaud de la matière plastique.

Le but de la présente invention est ainsi de proposer un joint de transmission dans lequel le problème de l'usinage des pistes est éliminé, ainsi que divers procédés pour réaliser dans des conditions particulièrement économiques un élément à pistes de coulissement pouvant convenir pour un tel joint. Les procédés doivent permettre aux joints équipés des éléments ainsi obtenus de bénéficier pleinement de leurs hautes performances intrinsèques de confort.

Suivant un premier aspect de l'invention, le joint de transmission articulé télescopique, notamment pour l'automobile, comportant un premier élément et un second élément reliés l'un à l'autre de manière articulée télescopique par des éléments intermédiaires qui sont reliés avec le premier élément par des liaisons de type rotule ayant des centres répartis autour d'un axe du premier élément, chaque élément intermédiaire ayant en outre une surface de section transversale sensiblement circulaire qui comprend une surface cylindrique et qui est appuyée sur une piste longitudinale respective sensiblement cylindrique de profil complémentaire appartenant au second élément, les pistes longitudinales ayant des axes répartis autour d'un axe du second élément est caractérisé en ce que chaque élément intermédiaire est un patin dont la surface cylindrique est appuyée de manière permanente et glissante sur la piste cylindrique correspondante du second élément, et en ce que les pistes cylindriques du second élément sont définies par un habillage en feuillard élastique poli plaqué sur des avant-pistes d'un corps du second élément.

Suivant un deuxième aspect de l'invention, le procédé pour réaliser un élément ayant des pistes de coulissement axiales réparties circonférentiellement, en particulier pour joints de transmission articulés télescopiques, dans lequel on part d'un corps présentant des avant-pistes ayant un profil transversal conforme à celui des pistes de coulissement à réaliser, est caractérisé en ce qu'on contraint par flexion élastique et on présente en regard des avant-pistes un habillage en feuillard élastique poli ayant au repos, avant montage, un profil transversal voisin de celui de régions du corps comprenant les avant-pistes et, on fixe l'habillage au corps en laissant l'habillage subir une détente élastique partielle jusqu'à ce qu'il s'appuie élastiquement sur les avant-pistes de façon qu'une face extérieure polie de l'habillage constitue les pistes.

Suivant un troisième aspect de l'invention, le procédé pour réaliser un élément ayant des pistes de coulissement axiales réparties circonférentiellement, en particulier pour joint de transmission articulé télescopique, dans lequel on réalise un corps présentant des avant-pistes ayant un profil transversal conforme à celui des pistes de coulissement à réaliser est caractérisé en ce qu'on réalise le corps par moulage, et en ce que, avant l'opération de remplissage du moule, on contraint par flexion élastique circonférentielle et on présente en regard de surfaces du moule correspondant aux avant-pistes un habillage en feuillard élastique poli ayant au repos, avant montage, un profil transversal voisin de celui de régions du corps comprenant les avant-pistes, et on fixe l'habillage auxdites surfaces du moule en laissant l'habillage subir une détente élastique partielle jusqu'à ce qu'il s'appuie élastiquement sur ces surfaces, puis on remplit le moule avec la matière destinée à constituer le corps et on laisse s'opérer une prise au moins partielle de la matière et une adhérisation concomitante de celle-ci avec l'habillage, de façon qu'après démoulage du corps muni de l'habillage une face extérieure polie de l'habillage constitue les pistes.

Ainsi, le corps de l'élément à pistes peut être réalisé en l'un quelconque des matériaux économiques évoqués plus haut.

Le feuillard de faible épaisseur, par exemple 0,1 à 1 mm selon les matériaux utilisés, recouvre les défauts de surface des avant-pistes du corps de l'élément et apporte un état de surface optique propice à la lubrification hydrodynamique indispensable.

Compte tenu de sa minceur, l'habillage est suffisamment flexible pour permettre un assemblage très rapide sur l'élément à pistes ou respectivement sur les surfaces du moule, par contrainte élastique de l'habillage puis libération et détente partielle de celui-ci contre la paroi correspondante du corps de l'élément à pistes ou les surfaces du moule.

Compte tenu de la faible pression superficielle exercée par les patins du joint sur les pistes définies par l'habillage pendant l'utilisation du joint, l'habillage ne risque aucune détérioration consécutive aux contraintes statiques ou de fatigue, malgré sa très faible épaisseur, puisqu'il ne subit pas de pression concentrée ou pression de Hertz contrairement aux surfaces actives des joints homocinétiques connus par exemple d'après le FR-A- 2 607 883.

Pour la même raison, l'habillage en feuillard ne subit pas non plus de contrainte de flexion, même si le matériau constitutif du barillet sur lequel l'habillage repose présente un module d'élasticité 10 ou 100 fois plus petit que celui de l'habillage, ce qui est le cas par exemple pour un habillage en feuillard d'acier équipant un barillet moulé en nylon.

De préférence, l'habillage est fabriqué à partir de feuillard terminé par laminage à froid ("skin pass", littéralement "passe de formation d'une peau") et présente une surface parfaitement glacée et une épaisseur constante pour un coût peu élevé.

Le joint selon l'invention présente simultanément les avantages suivants :
– hautes performances de confort grâce à un très libre coulissement ;
– faible coût grâce à un élément à pistes longitudinales dont la fabrication en série est facile et rapide avec des investissements modérés.

D'autres particularités et avantages de l'invention ressortiront encore de la description ci-après, relatives à des exemples non limitatifs.

Aux dessins annexés :
– la figure 1 est une vue en bout schématique, partiellement en coupe transversale, d'un joint selon l'invention, l'arbre du tripode n'étant pas monté, la moitié inférieure de la figure montrant le barillet seul avec une fourrure ;
– la figure 2 est une vue en coupe selon le plan II-II de la figure 1, l'arbre du tripode étant monté ;
– la figure 3 est une vue schématique en coupe selon la ligne III-III de la figure 1, la partie droite n'étant que partiellement représentée ;
– la figure 4 est une vue en plan d'un patin, côté portée cylindrique ;
– la figure 5 est une vue en plan d'un patin, côté portée sphérique ;
– la figure 6 est une vue analogue à la figure 2, lorsque le joint fonctionne sous un angle de brisure ;
– la figure 7 est une vue de face du barillet, dont la bride n'est pas représentée ;

– la figure 8 est une vue en perspective d'une fourrure ;

– la figure 9 est une vue en coupe axiale du barillet muni de deux modes de réalisation des fourrures ;

– la figure 10 est une vue en perspective du deuxième mode de réalisation des fourrures ;

– la figure 11 est une vue en perspective d'un troisième mode de réalisation des fourrures ;

– la figure 12 est une vue en bout d'un quatrième mode de réalisation des fourrures ;

– la figure 13 est une vue en bout d'un barillet équipé du quatrième mode de réalisation des fourrures, la bride du barillet n'étant pas représentée ;

– la figure 14 est une vue en élévation latérale d'une ébauche en vue de la fabrication du quatrième mode de réalisation des fourrures ;

– la figure 15 est une vue en bout, avec coupe partielle, d'un deuxième mode de réalisation du joint ;

– la figure 16 est une vue en coupe axiale du barillet de ce joint ;

– la figure 17 est une vue de face du corps de ce barillet, sa bride n'étant pas représentée ;

– la figure 18 est une vue en élévation latérale d'une ébauche au cours de la fabrication de la fourrure du joint de la figure 15 ;

– la figure 19 représente en perspective à l'état libre un exemple de fourrure en feuillard mince pour la mise en oeuvre d'un autre procédé selon l'invention ;

– la figure 20 représente schématiquement en coupe axiale un moule muni des fourrures avant injection du matériau, la partie supérieure de la figure correspondant à un barillet portant une fusée, et la partie inférieure de la même figure correspondant à un barillet à bride ;

– la figure 21 est une coupe transversale selon la ligne XXI-XXI de la figure 20 ;

– la figure 22 représente à l'état libre une fourrure prête au montage sur le noyau du moule d'un barillet destiné à un joint sensiblement selon la figure 15 ;

– la figure 23 est une coupe schématique d'un moule pour le barillet comportant la fourrure de la figure 22, laquelle est encliquetée sur noyau ;

– la figure 24 représente la fourrure de la figure 22 après un premier stade de pliage ; et

– la figure 25 est une coupe longitudinale du barillet obtenu par le procédé des figures 22 à 24, la partie supérieure illustrant le cas où le barillet est surmoulé sur une fusée à épanouissement denté, tandis que la partie inférieure illustre celui où le barillet est fixé au plateau de fusée par dentures frontales et écrou.

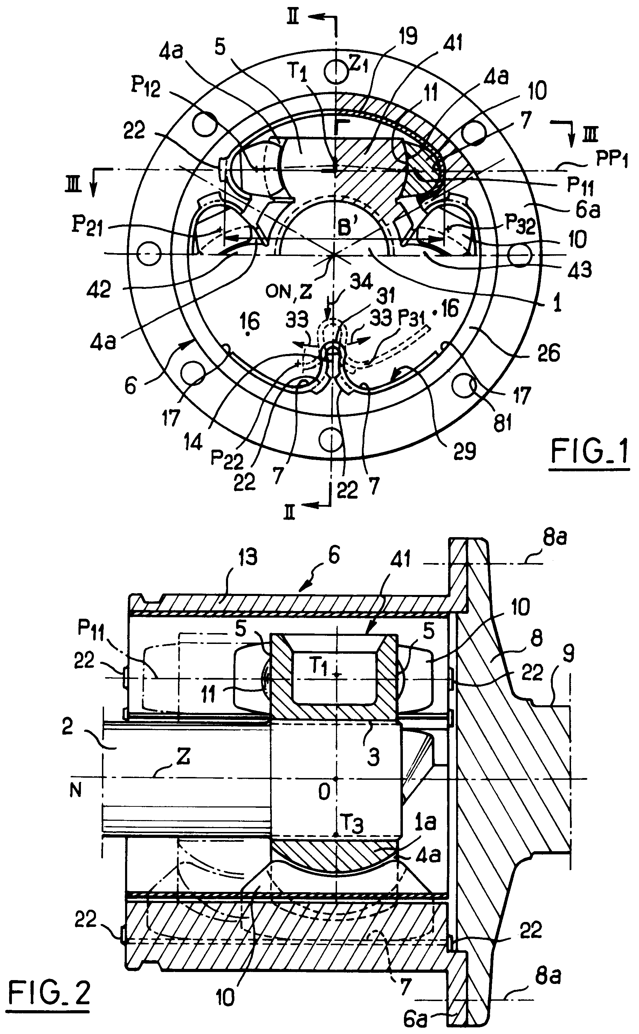

Dans l'exemple représenté aux figures 1 à 6, le joint de transmission du type homocinétique, sert à relier de manière articulée et télescopique et à assurer la transmission d'un couple entre un arbre 9 qui peut être relié à une source motrice du véhicule et un arbre 2 qui peut être l'arbre de sortie du joint vers la roue motrice d'un véhicule automobile. Le joint comprend un premier élément constitué par un tripode 1 comportant à son tour une bague la qui est emmanchée sur l'arbre 2 et qui est rendue solidaire de l'arbre 2 en rotation autour de l'axe commun ON de la bague et de l'arbre 2 au moyen de cannelures classiques ou par tout autre moyen approprié.

Le tripode comprend en outre trois tourillons sphériques 41, 42, 43 solidaires de la bague la et s'étendant radialement vers l'extérieur à partir de celle-ci. Les centres $T_1$, $T_2$ et $T_3$ des tourillons sont répartis régulièrement autour de l'axe ON et sont situés tous les trois dans un même plan coupant l'axe ON perpendiculairement en un point 0. De plus, les centre $T_1$, $T_2$ et $T_3$ sont à égale distance de l'axe ON.

Les tourillons sphériques 41, 42, 43 comportent chacun deux régions d'appui sphérique 4a, convexes, qui appartiennent à une même sphère idéale de centre $T_1$, $T_2$ et $T_3$ respectivement, selon le tourillon considéré. Les deux régions d'appui sphériques 4a de chaque tourillon 4 appartiennent à une même sphère idéale et sont séparées l'une de l'autre par deux méplats 5, de manière à limiter la dimension du tripode parallèlement à l'axe ON.

Le joint comprend en outre un second élément constitué par un barillet 6, de forme générale cylindrique, qui porte intérieurement six pistes longitudinales 7 ayant un profil transversal concave sensiblement circulaire. Le tourillon 41 s'étend entre les pistes 7 d'axe $P_{11}$ et $P_{12}$ et chacune de ses régions d'appui sphériques 4a est tournée vers l'une respective de ces deux pistes. Il en va de même du tourillon 42 vis à vis des pistes d'axe $P_{21}$ et $P_{22}$, et du tourillon 43 vis à vis des pistes $P_{31}$ et $P_{32}$.

Le barillet 6 comporte à une extrémité opposée à l'arbre 2 une bride de fixation 6a par laquelle il est fixé à un plateau 8 au moyen de vis qui ne sont représentées que par leurs axes 8a. Le plateau 8 est solidaire de l'arbre 9 de prise de puissance motrice du véhicule. Les axes des pistes 7 sont parallèles à l'axe Z de l'arbre 9 et situés à égale distance de celui-ci.

Les axes $P_{11}$ et $P_{12}$ des deux pistes situées de part et d'autre du tourillon 41 sont disposés symétriquement de part et d'autre d'un demi-plan $ZZ_1$ (figure 1) issu de l'axe Z et passant par le centre $T_1$. Lorsque le joint est aligné, (axes ON et Z confondus), le centre du tourillon $T_1$ est situé à une très faible distance radiale au-delà d'un plan $PP_1$ auquel appartiennent les deux axes $P_{11}$ et $P_{12}$ des deux pistes 7 situées de part et d'autre du tourillon.

Bien entendu, les deux autres tourillons et les pistes qui leur sont associées obéissent à des règles strictement correspondantes.

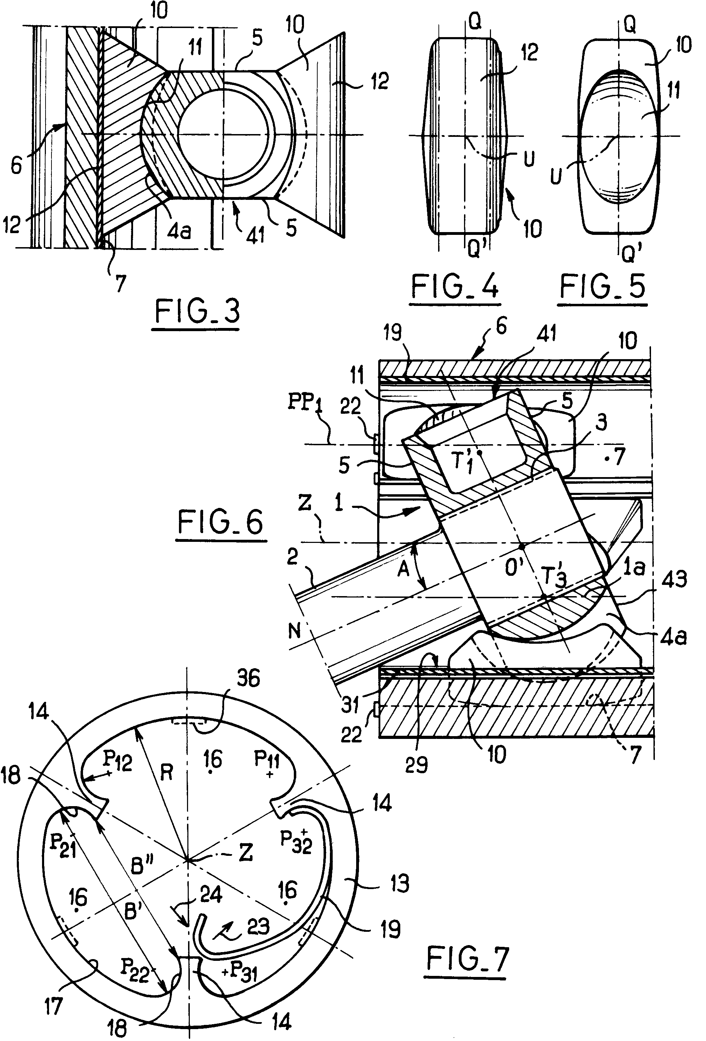

La liaison articulée et télescopique entre le barillet 6 et le tripode 1 s'effectue grâce à six patins 10 dont chacun est interposé entre l'une des pistes 7 et la région d'appui sphérique 4a située en regard. Chaque patin 10 comporte une surface sphérique concave 11 de même rayon que les régions d'appui sphériques 4a et qui est en contact glissant avec la région d'appui sphérique correspondante 4a du tripode. Ainsi, à l'état monté, le centre U de la surface sphérique concave 11 (figure 5) de chaque patin 10 coïncide avec le centre $T_1$, $T_2$, ou $T_3$ du tourillon correspondant (figures 1 à 3 et 6).

Chaque patin 10 comprend en outre une surface cylindrique convexe à section circulaire 12, d'axe QQ' (figures 4 et 5) et de rayon égal au rayon du profil circulaire des pistes 7. En service, les surfaces cylindriques convexes 12 sont en contact avec les pistes concaves 7, les axes QQ' (figure 4) des surfaces 12 coïncidant respectivement avec les axes $P_{11}$, $P_{12}$ etc... des pistes 7 du barillet 6.

Les patins 10 sont capables de glisser le long des pistes 7 et d'osciller autour des axes précités dans les pistes 7 par leur contact glissant avec ces dernières. Par ailleurs, les patins 10 sont capables de tourillonner et d'osciller sur les tourillons 41, 42 et 43 grâce au contact glissant entre les surfaces sphériques concaves 11 des patins 10 et les régions d'appui sphérique 4a des tourillons.

Selon l'invention, le barillet 6 comprend un corps 13 (voir aussi figure 7) de forme générale cylindrique, dont une paroi périphérique intérieure comprend trois crêtes longitudinales 14 régulièrement réparties autour de l'axe Z et qui définissent entre elles des alvéoles 16 qui ont une forme en contre-dépouille en ce sens que leur dimension maximale B' mesurée selon une direction tangentielle par rapport à l'axe Z, est supérieure à la dimension tangentielle B" de leur ouverture vers l'axe Z.

Chaque alvéole 16 est défini par deux avant-pistes 18 adossées chacune à l'une des crêtes 14, et raccordées l'une à l'autre par une face de liaison cylindrique 17, d'axe Z et de rayon R. Les avant-pistes 18 ont même axe $P_{11}$, $P_{12}$, $P_{21}$, $P_{22}$, $P_{31}$, $P_{32}$ que les pistes 7 à réaliser mais ont un rayon légèrement accru par rapport à celles-ci.

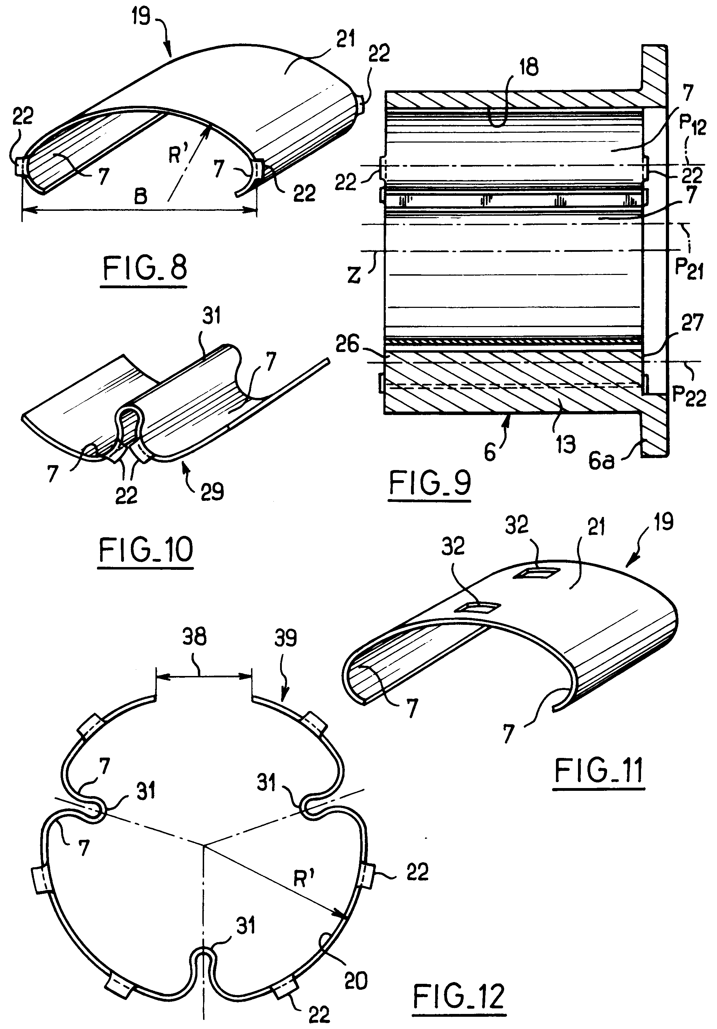

Le barillet 6 comprend en outre sur la paroi périphérique intérieure du corps 13, un habillage constitué dans l'exemple de trois fourrures individuelles 19 (figures 1 et 8) qui recouvrent chacune la surface de l'alvéole 16, c'est-à-dire les deux avant-pistes 18 et la face de liaison 17. L'habillage s'étend donc aussi en dehors des pistes 7, sur quasiment tout le contour intérieur du barillet, ce qui lui permet en service, grâce à sa conductibilité thermique, de répartir et évacuer notamment dans tout le barillet et le lubrifiant la chaleur engendrée par le glissement sous charge. Cette caractéristique permet malgré la minceur du feuillard la transmission d'une puissance importante sous angle sans risque d'échauffement rédhibitoire pour le matériau plastique constituant le corps du barillet et les patins.

Chaque fourrure 19 est réalisée en feuillard terminé par laminage à froid de manière à présenter sur sa face concave tournée à l'opposé du corps 13 une surface parfaitement glacée. Ce feuillard, coupé à la longueur voulue à partir d'une bande continue, est ensuite cintré de manière à définir sur sa face concave les deux pistes 7 sensiblement avec le rayon voulu correspondant au rayon des surfaces cylindriques 12 des patins 10. Les deux pistes 7 sont reliées par une voûte de liaison 21 dont la face extérieure convexe a au repos, avant montage, un rayon R' légèrement supérieur au rayon R des faces de liaison 17 du corps 13.

Avant le cintrage, les bords circonférentiels de chaque fourrure 19 sont découpés de manière à ménager aux extrémités des pistes 7 des languettes 22 qui sont repliées en équerre vers l'extérieur.

Pour monter les fourrures 19 dans le corps 13, comme le montre la figure 7 en bas à droite, on présente la fourrure 19 en face de l'alvéole 16 correspondante, et on la met sous contrainte de flexion circonférentielle, illustrée par la flèche 23, puis on la pousse radialement vers l'extérieur dans l'alvéole 16 comme cela est illustré par la flèche 24, de manière à lui faire franchir l'entrée étroite (de largeur B"), puis on la laisse se détendre partiellement dans l'alvéole 16. La détente ne peut pas être totale puisque le rayon au repos R' de la voûte 21 est supérieur au rayon intérieur R de la face de liaison 17 de l'alvéole 16. Dans ces conditions, la fourrure 19 demeure sous contrainte et par conséquent plaquée contre les avant-pistes 18 et la face de liaison 17 de l'alvéole.

La distance entre les languettes 22 des deux extrémités de la fourrure 19 correspond à la distance entre deux faces 26 et 27 (figure 9) du corps 13 dans lesquelles débouchent les avant-pistes 18. Lorsque les fourrures 19 sont en place dans le corps 13, les languettes 22 prennent appui sur les faces 26 et 27 et positionnent ainsi axialement les fourrures 19 relativement au corps 13.

Dans le mode de réalisation représenté en bas de la figure 1, qui ne sera décrit qu'en ce qui concerne ses différences par rapport au précédent, chaque fourrure 29 définit deux pistes 7 adossées à la même crête 14 et appartenant par conséquent à deux alvéoles 16 différents. Les deux pistes 7 sont réunies l'une à l'autre par une région de liaison 31 qui a un profil en épingle à cheveux entourant l'extrémité libre élargie de la crête 14.

Comme représenté au bas de la figure 1, pour mettre en place une fourrure 29 sur le corps 13, on contraint élastiquement en flexion circonférentielle la région de liaison 31 de manière à augmenter son rayon de courbure pour lui faire franchir l'extrémité élargie de la crête 14, selon les flèches 33, puis on la pousse radialement vers l'extérieur selon la flèche 34 en lui laissant subir une détente élastique partielle qui plaque contre les avant-pistes 18 les régions de la fourrure 29 qui définissent les pistes 7.

Le mode de réalisation de la figure 11 est identique à celui de la figure 8 et du haut des figures 1 et 9, excepté que la fourrure 19 est démunie de languettes 22 mais comporte par contre à travers sa voûte 21 deux ajours 32 de préférence rectangulaires ou circulaires dans lesquels s'emboîtent des bossages 36 (représentés en trait mixte à la figure 7) prévus sur la face de liaison 17 des alvéoles 16. L'interpénétration des ajours 32 et des bossages 36 positionne axialement les fourrures 19 dans le corps 13. Ce mode de réalisation évite d'avoir à découper les bords du feuillard à partir duquel on réalise les fourrures, et on évite ainsi les chutes correspondantes.

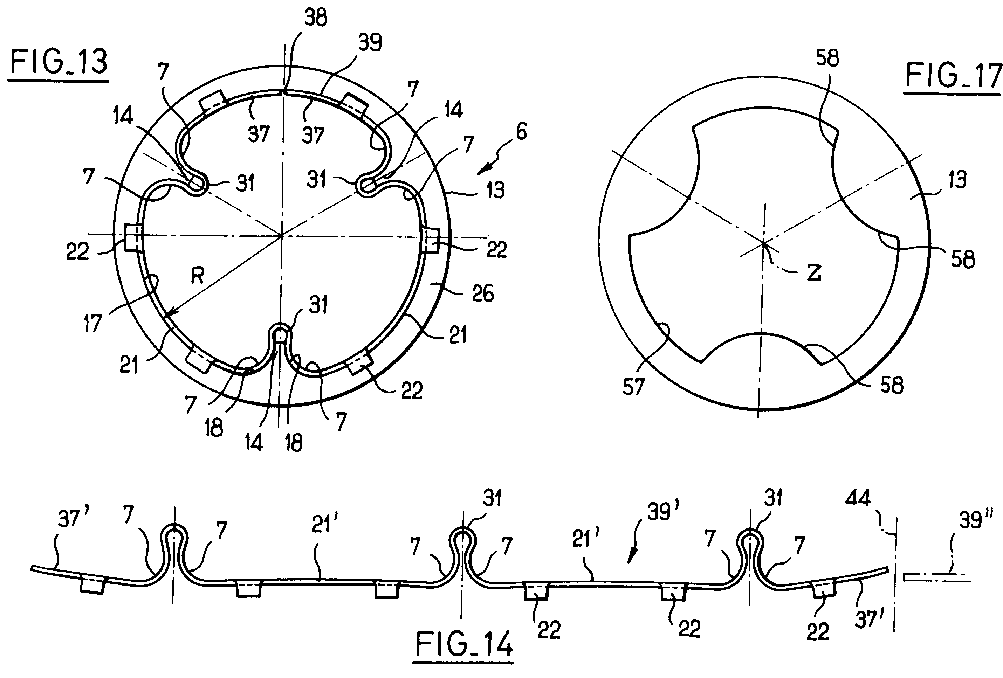

Dans l'exemple représenté aux figures 12 et 13, quine sera décrit qu'en ce qui concerne ses différences par rapport à celui du haut des figures 1 et 9, l'ensemble de l'habillage est réalisé au moyen d'une seule fourrure 39 définissant les six pistes 7 réunies deux à deux par trois régions de liaison 31 analogues à la région de liaison 31 de la fourrure 29 du bas de la figure 1. La fourrure 39 est interrompue par une fente axiale 38 qui a au repos, avant montage, une dimension relativement importante, mais qui se réduit à un simple interstice (figure 13) lorsque la fourrure 39 est installée à l'intérieur du corps 13.

Les deux pistes 7 voisines de la fente 38 sont chacune raccordées à une demi-voûte terminale 37. Les quatre autres pistes 7 sont deux à deux raccordées par des voûtes 21. Comme le montre la figure 12, les voûtes 21 ont au repos un rayon extérieur R' supérieur au rayon intérieur R des faces de liaison 17 du corps 13.

Pour mettre en place la fourrure 39, on l'enroule sur elle-même en faisant se chevaucher les deux bords destinés à définir la fente 38, et on l'enfile axialement dans le corps 13. Cet enroulement a pour effet à la fois d'écarter les régions de liaison 31, c'est-à-dire d'augmenter leur rayon de courbure, et au contraire de réduire le rayon de courbure des voûtes 21. On parvient donc ainsi à engager les crêtes 14 dans les régions 31 et en même temps les voûtes 21 dans les alvéoles 16. On laisse alors se détendre partiellement la fourrure 39 dans le corps 13 pour que les régions définissant les pistes 7 se plaquent sur les avant-pistes 18.

Comme le montre la figure 14, pour réaliser les fourrures 39, on peut avantageusement partir d'une bande continue de feuillard, la dimension longitudinale de la bande étant destinée à correspondre à la dimension circonférentielle de la fourrure à fabriquer. On forme d'abord les languettes 22 puis les pistes 7 et les régions de liaison 31, en une seule opération de cintrage pour chaque couple de pistes 7 reliées par une région 31. C'est également à ce stade qu'on plie les languettes 22 en équerre. Ensuite on tranche l'ébauche de fourrure 39' du reste 39" de la bande de feuillard, comme schématisé par le trait mixte 44, puis on galbe les parties intermédiaires 21' pour constituer les voûtes 21 de rayon R. Les régions 37' destinées à constituer les demi-voûtes 37 sont également galbées, pour avoir un rayon de courbure légèrement supérieur à R, mais éventuellement inférieur à R'.

La dimension circonférentielle de la fente 38 (figure 12) de la fourrure au repos avant montage est choisie en fonction de l'élasticité propre et de l'épaisseur du matériau utilisé pour la fourrure, ainsi qu'en fonction de la force élastique souhaitée pour le maintien de la fourrure dans le corps 13 du barillet.

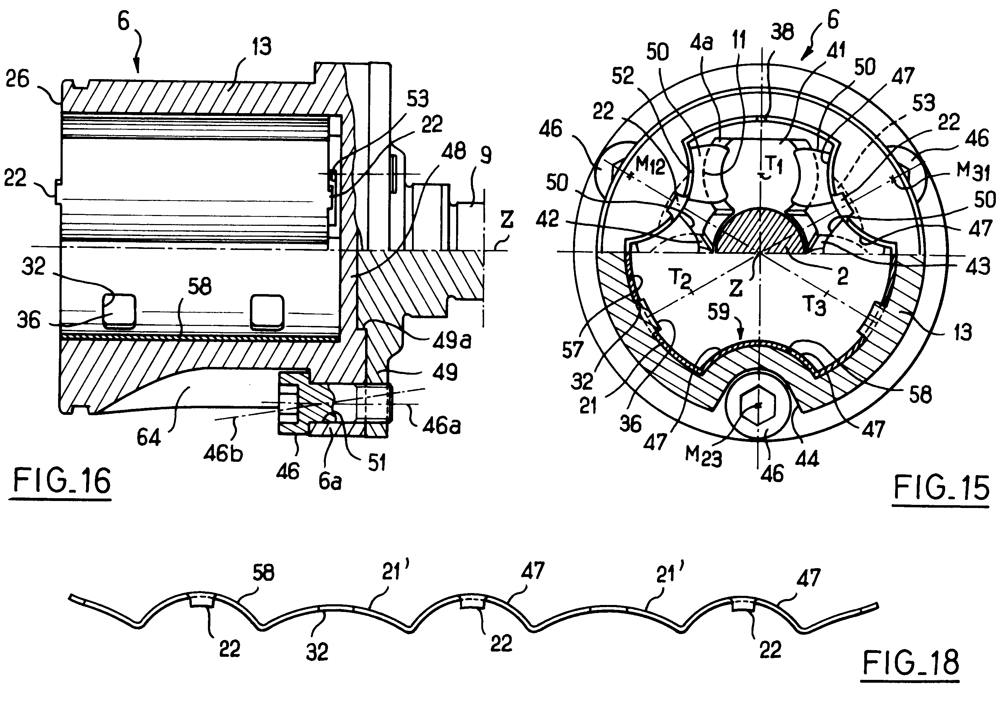

Le joint de transmission selon la figure 15 ne sera décrit qu'en ce qui concerne ses différences par rapport à celui de la figure 1.

Les pistes longitudinales 47 du barillet 6 sont des pistes cylindriques convexes ayant une section transversale en segment de cercle dont les axes $M_{12}$, $M_{23}$ et $M_{31}$ sont situés au-delà des surfaces actives de ces pistes relativement au centre $T_1$, $T_2$ ou $T_3$ du tourillon 41, 42 ou 43 associé.

Chaque axe $M_{12}$, $M_{23}$ ou $M_{31}$ est commun à deux pistes 47 adjacentes coopérant avec deux tourillons différents. Chaque paire de pistes 47 ayant un axe commun $M_{12}$ ou $M_{23}$ ou $M_{31}$ est formée par deux régions longitudinales, s'étendant côte à côte, d'une même surface cylindrique convexe tournée vers l'axe Z du barillet. Ainsi, la surface active cylindrique d'axe $M_{12}$ reçoit à la fois l'un des patins 50 appuyés sur le tourillon 41 et l'un des patins 50 appuyés sur le tourillon 42.

La surface cylindrique de chaque patin 50 est une surface cylindrique concave 52 de même axe et même rayon que les pistes 47, et qui glisse longitudinalement et transversalement sur la piste 47 qui lui est associée.

Le corps 13 du barillet 6 comprend sur sa face périphérique intérieure des avant-pistes 58 cylindriques convexes d'axe $M_{12}$, $M_{23}$, $M_{31}$ et de rayon légèrement inférieur à celui des pistes 47. Les trois avant-pistes 58 sont reliées par des faces de liaison 57 cylindriques concaves d'axe Z. Le barillet 6 est fermé à l'une de ses extrémités par une paroi 48 du corps 13, laquelle est fixée par des vis 46 à un flasque d'extrémité 49 de l'arbre 9. Un centrage mutuel 49a du flasque 49 et de la paroi 48 assure la coaxialité entre l'arbre 9 et le barillet 6. La tête des vis 46 est en partie reçue dans des évidements 64 pratiqués dans la paroi extérieure du corps 13 au dos des avant-pistes 58. Les vis 46 traversent les trous 51 de la bride 6a du corps 13 pour se visser dans des trous filetés du flasque 49. L'axe 46a des vis 46 est représenté parallèle à l'axe Z du barillet, mais, en variante, les vis 46 peuvent être montées selon un axe 46b incliné vers l'arbre 9 pour faciliter le vissage.

Cette fixation d'un encombrement réduit utilise à la fois la possibilité de réaliser les évidements 64 au dos des avant-pistes 58 et la facilité avec laquelle ces évidements peuvent être réalisés lors du moulage du barillet en des matériaux tels que les fontes métalliques ou les matières plastiques renforcées ou non.

Cette fixation démontable, économique, compacte et légère constitue donc un avantage supplémentaire découlant de la présente invention.

Dans cet exemple, l'habillage est réalisé par une fourrure unique 59 qui habille toute la paroi intérieure du corps 13 à l'exception de la fente 38 qui, comme dans l'exemple précédent, a une valeur relativement importante lorsque la fourrure est au repos avant montage, mais se réduit à un simple interstice lorsque la fourrure est en place à l'intérieur du corps 13.

La fourrure 59 a un profil correspondant à celui de la paroi intérieure du corps 13 et présente ainsi des régions convexes définissant les pistes 47 alternant avec des régions concaves définissant les voûtes 21 recouvrant les faces de liaison 57. Au repos, les voûtes 21 ont un rayon extérieur plus grand que le rayon intérieur des faces de liaison 57 pour que la fourrure soit plaquée par contrainte élastique contre la paroi intérieure du corps 13 sur tout son pourtour.

Dans l'exemple représenté à la partie supérieure des figures 15 et 16, la fourrure 59 présente sur ses bords périphériques des languettes 22 qui respectivement s'appliquent sur la face terminale 26 du corps 13 et s'engagent dans des saignées 53 pratiquées dans le sommet des avant-pistes 58 au voisinage de la paroi 48.

Dans l'exemple représenté en bas des figures 15 et 16, les languettes 22 sont remplacées par les ajours 32 et bossages 36 déjà décrits en référence à la figure 11 et à la figure 7 respectivement.

La figure 18 représente la fourrure 59 à un stade intermédiaire de sa fabrication en série à partir d'une bande continue de feuillard. Les pistes 58 sont formées ainsi que les languettes 22. Dans le cas où on prévoit des ajours 32 à la place des languettes 22, ceux-ci ont également déjà été découpés. Pour former successivement les pistes 47, on donne initialement aux régions 21' destinées à constituer les voûtes 21 une courbure dans le même sens que les pistes 47, de façon que le feuillard conserve encore à ce stade une configuration très généralement rectiligne. On coupe ensuite le feuillard à la longueur voulue et c'est seulement ensuite qu'on inverse la courbure des régions 21' pour qu'elles forment les voûtes 21.

Dans tous les exemples qui viennent d'être décrits, le feuillard à partir duquel on réalise les fourrures peut être en acier, en alliage de cuivre ou d'aluminium. Il peut en outre être plaqué de matériau propice au glissement, par électrolyse ou tout autre moyen connu. Le maintien des fourrures peut aussi être complété par leur collage partiel ou total sur le barillet. Le choix dépend des machines d'assemblage et du matériau constitutif choisi pour le barillet.

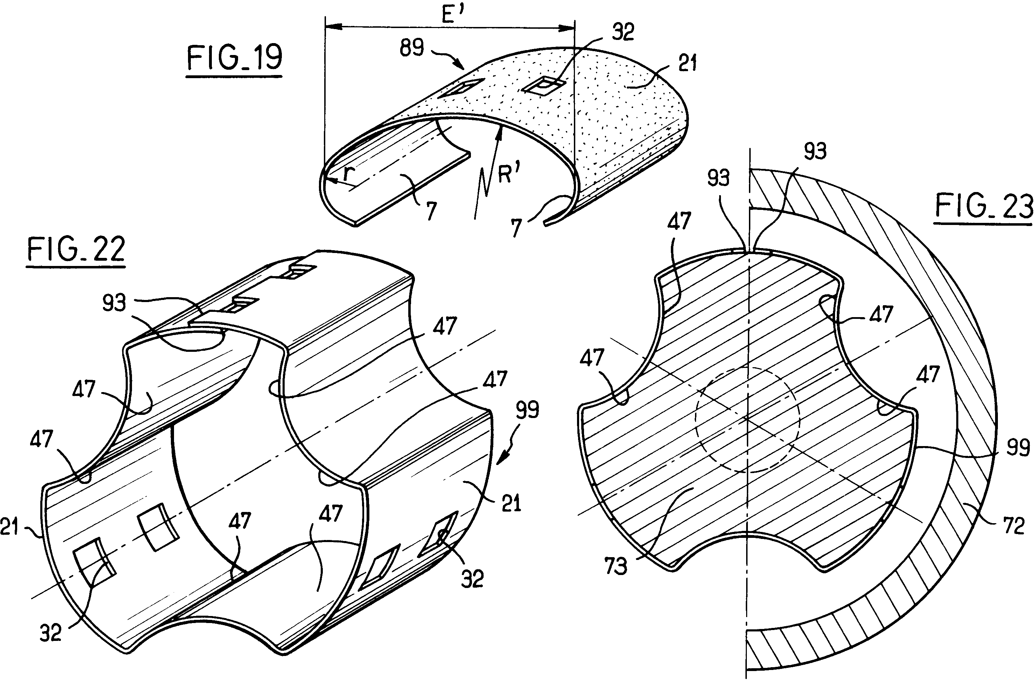

On va maintenant décrire en référence aux figures 19 à 21 un deuxième procédé pour réaliser le barillet 6 d'un joint de transmission tout-à-fait similaire à celui représenté aux figures 1 à 6.

On utilise un moule 71 comprenant essentiellement trois parties, à savoir un boîtier 72 qui va former en particulier la face annulaire terminale du corps du barillet, un noyau 73 et un couvercle 77. Le noyau 73 comporte pour son centrage relativement au boîtier 72. Cet axe est un axe 74 reçu dans un alésage central du fond du boîtier 72. Cet axe est terminé par un filetage sur lequel est serré un écrou 76 s'appuyant sur le fond du boîtier 72 pour immobiliser le noyau 73 contre la paroi intérieure du fond du boîtier 72. Le couvercle 77 est destiné à former notamment la face arrière du barillet, opposée à l'axe du tripode.

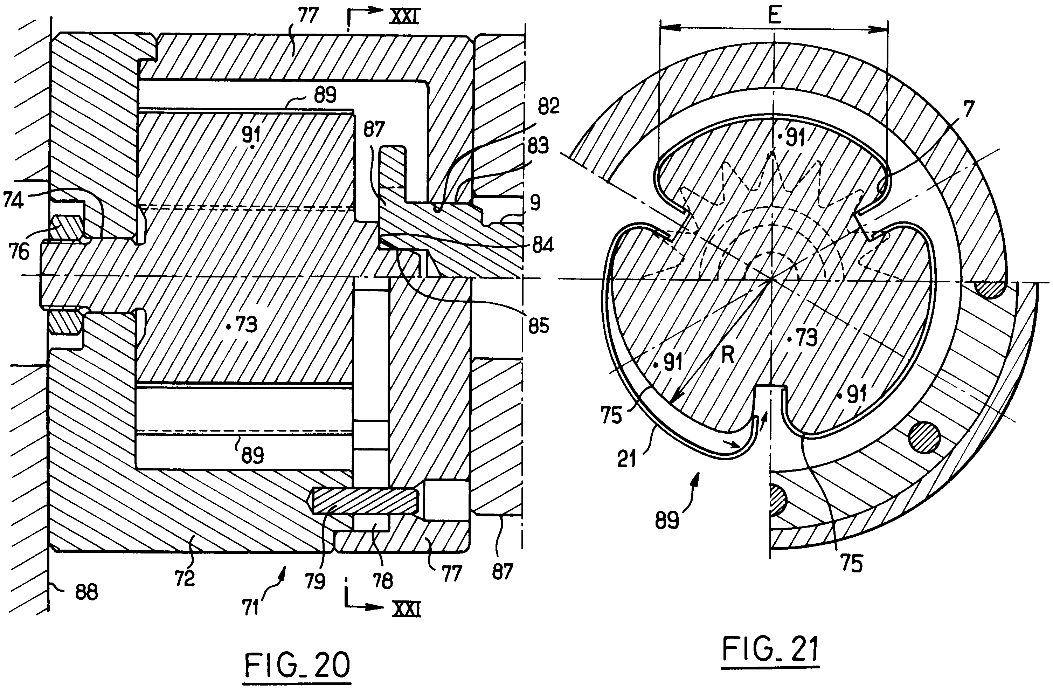

Dans l'exemple représenté en haut de la figure 20, c'est essentiellement le couvercle qui forme la paroi latérale extérieure du barillet. Au contraire, dans l'exemple représenté en bas de la figure 20, c'est le boîtier 72 qui assure cette fonction, car le plan de joint entre le boîtier 72 et le couvercle 77, correspondant sensiblement au plan XXI-XXI, est voisin d'une région 78 de l'espace intérieur du moule dans laquelle doit se former une bride de fixation du barillet à réaliser. Des noyaux individuels 79 engagés dans le boîtier 72 et dans le couvercle 77 sont prévus pour former des trous 81 (figure 1) dans la bride 6a à réaliser.

Dans l'exemple représenté à la partie supérieure de la figure 21, le barillet sera réalisé sans bride. Par contre, le couvercle 77 comprend un alésage central 82 dans lequel se positionne une portée cylindrique 83 de la fusée 9 à laquelle le barillet doit en service être rigidement relié. La fusée 9 est appuyée axialement contre un épaulement 84 du noyau 73 et est emboîté de manière centrée sur un bossage cylindrique 86 du noyau 73. Dans cette situation, un épanouissement denté 87 de la fusée 9 fait saillie radialement dans l'espace de moulage en étant espacé axialement à la fois du noyau 73 et du couvercle 77, de façon que la matière vienne emprisonner axialement de part et d'autre l'épanouissement 87 lors de l'injection tandis que les dents de l'épanouissement 87 assureront la solidarisation circonférentielle entre la fusée 9 et la matière du corps moulé.

Avant d'injecter la matière du corps dans le moule 71, et avant même de fermer le moule en rapprochant le piston de presse 87 auquel est fixé le couvercle 77 du moule, de la table 88 à laquelle est fixé le boîtier 72, on commence par placer sur chacun de trois lobes 91 du noyau 73 une fourrure en feuillard élastique représentée à la figure 19. Cette fourrure 89 ne sera décrite qu'en ce qui concerne ses différences par rapport à la fourrure 19 de la figure 11. Sa corde intérieure E' est légèrement plus petite que la corde extérieure E correspondante d'un lobe 91. La corde E est égale à la corde intérieure voulue entre les deux pistes 7 du barillet à réaliser sauf corrections à effectuer pour tenir compte du retrait et de la contraction du matériau injecté. Cette particularité est obtenue en donnant à la voûte de liaison 21 un rayon intérieur initial R′ inférieur au rayon correspondant R des lobes 91. Par contre, le rayon r des pistes 7 a dès l'origine sa valeur voulue pour le joint de transmission terminé. Par ailleurs, la face concave des fourrures 89, qui est celle destinée à constituer notamment les pistes 7, a un état de surface poli "glacé", alors qu'au contraire, l'autre face est de préférence dépolie, non seulement pour des raisons d'économie, mais aussi pour favoriser son adhérence avec la matière plastique du corps du barillet.

Pour mettre en place les fourrures 89 sur le noyau 73, on les déforme élastiquement pour augmenter le rayon de courbure notamment de la voûte de liaison 21, comme représenté en bas à gauche de la figure 21 de manière schématique. L'écartement représenté à la figure 21 peut s'avérer excessif dans certains cas, notamment si le feuillard est relativement épais, mail il est également possible d'enfiler les fourrures 89 axialement depuis l'extrémité du noyau 73 opposée au fond du boîtier 72. Ce dernier mode de montage est particulièrement préféré dans le cas illustré en bas de la figure 20 où le boîtier 72 rend assez malaisé l'encliquetage en direction radiale.

Une fois les fourrures 89 en place, leurs faces concaves destinées à constituer notamment les pistes 7 sont plaquées sur des surfaces convexes correspondantes 75 (figure 21) du noyau 73 tandis que les faces convexes, exposées, de préférence dépolies, des fourrures ont pu être enduites d'un adhesif. Ces faces exposées des fourrures sont destinées à former les avant-pistes du corps que l'on va mouler et à adhérer sur celles-ci. On ferme ensuite le moule par déplacement du piston 87 relativement à la table 88, et on injecte la matière plastique par des orifices d'injection non représentés répartis de la manière que l'homme de l'art sait déterminer.

Après prise de la matière plastique, laquelle envahit l'espace laissé libre à l'intérieur du moule en particulier les ajours 32 des fourrures 89, les fourrures sont solidaires de la matière plastique constituant le corps du barillet. Pour le démoulage, il suffit d'écarter le piston 87 de la table 88 et d'éjecter le barillet dont, le cas échéant (moitié supérieure de la figure 20) la fusée 9 est solidaire.

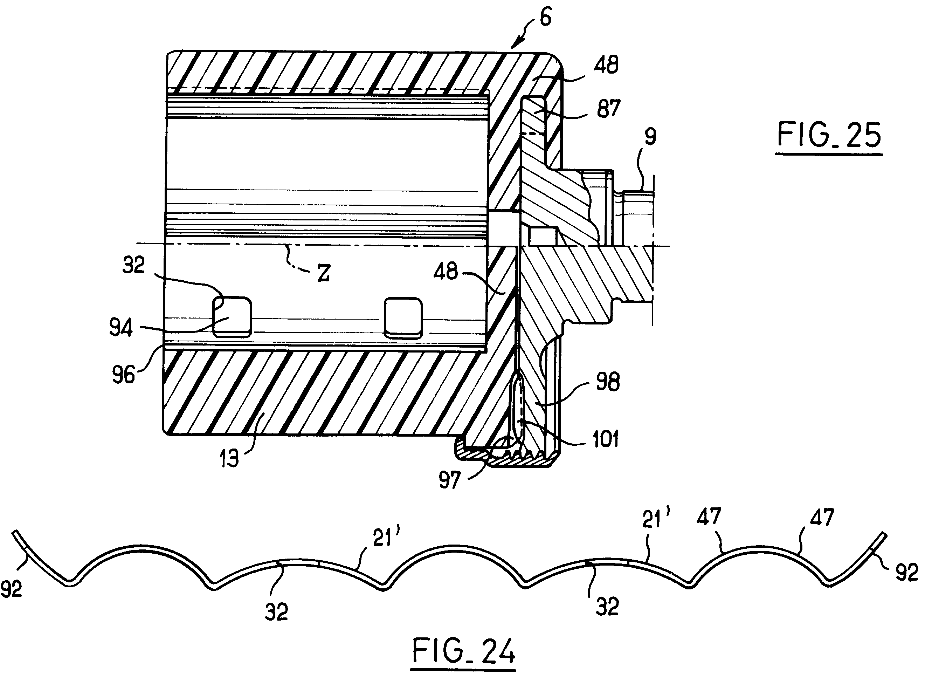

L'exemple des figures 22 à 25 illustre un procédé pour réaliser le barillet d'un joint du type de celui représenté à la figure 15.

Le moule utilisé est semblable à celui représenté aux figures 20 et 21 excepté que le noyau central a un profil différent (figure 23), complémentaire de l'espace libre à ménager à l'intérieur du barillet.

Dans cet exemple, les six pistes 47 (figure 15) sont formées dans une unique bande de feuillard d'acier 99 présentant des surfaces polies "glacées" et de faible épaisseur (0,2 à 1 mm de préférence).

La figure 24 présente l'ébauche de la fourrure de feuillard 99 après la première opération de pliage à la presse. Les pistes 47 sont cambrées à leur rayon quasi définitif ainsi que les demi-voûtes de raccordement 92 des deux extrémités, les deux voûtes de raccordement intermédiaires 21′ ont par contre leur courbure inversée. Les ajours de forme rectangulaire 42 ou circulaire sont découpés préalablement à la première opération de formage, en même temps que le cisaillage à longueur du feuillard. Le nombre, la distribution et la forme des ajours 42, toujours situés hors des pistes 47, sont donnés ici à titre d'exemple.

La seconde et dernière opération de formage inverse la courbure des voûtes de liaison 21′ afin d'obtenir la fourrure 99 représentée à la figure 22 prête à être emmanchée sur le noyau 73 du moule.

A l'état libre, les extrémités 93 de la fourrure se superposent et les courbures notamment des voûtes 21 sont altérées de manière qu'une fois chaussée sur le noyau du moule par ouverture élastique, notamment agrandissement du rayon de courbure des voûtes 21, la fourrure 99 presse le profil du noyau 73 du moule sur son pourtour comme représenté à la figure 23.

Le barillet obtenu après injection de matière dans le moule, prise de cette matière et démoulage est représenté à la figure 25.

Lors du moulage, les ajours 32 sont emplis de matériau injecté qui forme dans ces ajours des plots d'ancrage 94 confortant la fixation de la fourrure 99 à l'intérieur du corps 13 du barillet. Le chant 96 de la fourrure 97 peut affleurer le bord du barillet, comme représenté à la figure 25, où se trouver en retrait de 1 ou plusieurs mm.

La partie supérieure de la figure 25 représente le barillet 6 obtenu lorsque, comme représenté à la figure 20, on a lors du moulage noyau dans la matière du barillet un épanouissement denté 87 de la fusée 9. En d'autres termes, l'épanouissement 87 constitue un insert de moulage dans le fond 48 du barillet 6.

La partie inférieure de la figure 25 représente une variante de ce barillet, dans laquelle le fond 48 porte sur sa face arrière, tournée en service à l'opposé de l'arbre 2 du tripode, des dentures frontales 97 obtenues lors du moulage. La fusée en acier 9 munie d'un plateau d'extrémité 98 porte également des dentures frontales complémentaires 101 formées à froid et bloquées axialement contre le fond du barillet au moyen d'un écrou en tôle 102 selon la technique proposée par les FR - A - 1 586 379 et FR - A - 2 426 831.

Les barillets qui viennent d'être décrits et leurs procédés d'obtention, ainsi que les joints qui en sont équipés, ont les avantages suivants :

– pistes parfaitement polies ou "glacées" procurant un glissement lubrifié hydrodynamiquement, assurant le confort et la longévité recherchés ;
– dissipation de la chaleur de glissement dans toute la masse du barillet et du lubrifiant, permettant la transmission sous angle d'une puissance importante ;

– constance de cotes donc, jeux d'assemblage réduits en fabrication de grande série et par conséquent absence de chocs aux inversions de couple et donc confort de conduite ;

– construction légère et insonore ;

– coût réduit de production en grande série, grâce aux cadences de réalisation permises, au faible colt de la matière première et à la modicité des investissements.

Bien entendu, l'invention n'est pas limitée aux exemples décrits et représentés.

On peut par exemple envisager l'application de l'invention aux joints de transmission dans lesquels les pistes de coulissement sont portées par l'élément intérieur du joint, ou encore aux joints de transmission comportant plus ou moins de trois paires de pistes de coulissement.

## Revendications

1. Joint de transmission articulé télescopique, notamment pour l'automobile, comportant un premier élément (1) et un second élément (6) reliés l'un à l'autre de manière articulée télescopique par des éléments intermédiaires (10, 50) qui sont reliés avec le premier élément (1) par des liaisons de type rotule (11, 4a) ayant des centres ($T_1$, $T_2$, $T_3$) répartis autour d'un axe (ON) du premier élément, chaque élément intermédiaire (10, 50) ayant en outre une surface de section transversale sensiblement circulaire qui comprend une surface cylindrique (12, 52) et qui est appuyée sur une piste longitudinale respective (7, 47) sensiblement cylindrique de profil complémentaire appartenant au second élément (6), les pistes longitudinales ayant des axes ($P_{11}$, $P_{12}$, $P_{21}$, $P_{22}$, $P_{31}$, $P_{32}$, $M_{12}$, $M_{23}$, $M_{31}$) répartis autour d'un axe (Z) du second élément,

caractérisé en ce que chaque élément intermédiaire est un patin dont la surface cylindrique (12, 52) est appuyée de manière permanente et glissante sur la piste cylindrique correspondante (7, 47) du second élément (6), et en ce que les pistes cylindriques du second élément sont définies par un habillage en feuillard (19, 29, 39, 49, 59, 89, 99) élastique poli plaqué sur des avant-pistes (18, 58) d'un corps (13) du second élément (6).

2. Joint selon la revendication 1, caractérisé en ce que l'habillage (19, 29, 39, 49, 59, 89, 99) est prolongé en-dehors des pistes (7, 47).

3. Joint selon l'une des revendications 1 ou 2, caractérisé en ce que l'habillage (39, 59, 89, 99) présente en dehors des pistes des ajours (32) de positionnement axial, dans lesquels sont emboîtés des bossages complémentaires (36) du corps (13).

4. Joint selon l'une des revendications 1 à 3, caractérisé en ce que le corps (13) comprend des alvéoles (16) séparés par des crêtes (14) et définissant chacun deux avant-pistes concaves (18) et une face (17) de liaison entre ces deux avant-pistes, et en ce que l'habillage comprend pour chaque alvéole une fourrure (19, 39, 89) définissant les deux pistes (7) d'un alvéole et une région de liaison (21) entre ces deux pistes.

5. Joint selon l'une des revendications 1 à 3, caractérisé en ce que l'habillage comprend une fourrure (49, 59, 99) recouvrant sensiblement la totalité d'une paroi périphérique du corps (13) à l'exception d'une mince fente longitudinale (38) située en-dehors des pistes (7, 47).

6. Joint selon l'une des revendications 1 à 3, caractérisé en ce que les pistes sensiblement cylindriques (47) ont même rayon et ont deux à deux le même axe ($M_{12}$, $M_{23}$, $M_{31}$).

7. Joint de transmission selon la revendication 6, dans lequel le deuxième élément (6) est un barillet et les pistes (47) sont des pistes convexes portées par une face intérieure du barillet, caractérisé en ce que chaque paire de pistes (47) ayant un axe commun ($M_{12}$, $M_{23}$, $M_{31}$) est en contact avec deux éléments intermédiaires précités (50) appuyés sur des régions d'appui sensiblement sphériques (4a) appartenant à deux tourillons distincts (41, 42, 43) d'un tripode (1) constituant le premier élément.

8. Joint de transmission selon la revendication 7, caractérisé en ce que le barillet présente des évidements extérieurs (64) au dos des pistes convexes (47) et en ce que dans ces évidements (64) sont logées au moins partiellement des vis (46) de fixation du barillet (6) à un flasque (49) d'extrémité d'arbre (9).

9. Joint de transmission selon l'une des revendications 1 à 8, caractérisé en ce que les patins (10, 50) sont réalisés en une matière choisie dans le groupe comprenant les matières plastiques, en particulier le nylon, les métaux frittés poreux imprégnables de lubrifiant, l'acier revêtu de matière plastique, en particulier de nylon, les alliages à base de cuivre, de plomb ou d'étain.

10. Joint de transmission selon l'une des revendications 1 à 9, caractérisé en ce que l'habillage (19, 29, 39, 49, 59, 89, 99) est réalisé en une matière choisie dans le groupe comprenant l'acier, les alliages de cuivre et d'aluminium, les feuillards plaqués de matériaux propices au glissement.

11. Joint de transmission selon l'une des revendications 1 à 10, caractérisé en ce que le corps (13) est une pièce moulée.

12. Joint de transmission selon la revendication 11, caractérisé en ce que le corps est surmoulé sur un bout d'arbre muni de conformations (87) de solidarisation mutuelle axiale et circonférentielle.

13. Joint de transmission selon la revendication 11, caractérisé en ce que le corps (13) présente à distance de son axe (Z) sur une face opposée au premier élément, des conformations (97) sur lesquelles des conformations complémentaires (101) d'un bout d'arbre peuvent être serrées par un moyen de serrage (102).

14. Joint selon l'une des revendications 1 à 3, caractérisé en ce que le corps (13) comprend des alvéoles (16) séparées par des crêtes (14) et définissant chacun deux avant-pistes concaves (18) et une face (17) de liaison entre ces deux avant-pistes, et en ce que l'habillage comprend pour chaque alvéole une fourrure (19, 39, 89) définissant les deux pistes (7) d'une alvéole et une région de liaison (21) entre ces deux pistes.

15. Joint selon l'une des revendications 1 à 14, caractérisé en ce que l'habillage (19, 29, 49, 59) comprend à chaque extrémité des languettes (22) de positionnement axial, appuyées sur des faces (26,27, 53) du corps (13) adjacentes aux extrémités des avant-pistes (18, 58).

16. Joint de transmission selon l'une des revendications 1 à 15, caractérisé en ce que l'habillage (19, 29, 39, 49, 59) est plaqué sur les avant-pistes (18, 58) par sa propre élasticité.

17. Joint de transmission selon l'une des revendications 1 à 13, caractérisé en ce que l'habillage est, sur au moins une partie de sa surface, adhérisé au corps (13) du second élément (6).

18. Procédé pour réaliser un élément (6) ayant des pistes de coulissement axiales réparties circonférentiellement (7, 47), en particulier pour joint de transmission articulé télescopique, dans lequel on part d'un corps (13) présentant des avant-pistes (18, 58) ayant un profil transversal conforme à celui des pistes de coulissement à réaliser, caractérisé en ce qu'on contraint par flexion élastique circonférentielle et on présente en regard des avant-pistes (18, 58) un habillage (19, 29, 39, 49, 59) en feuillard élastique poli ayant au repos, avant montage, un profil transversal voisin de celui de régions du corps (13) comprenant les avant-pistes (18, 58), et on fixe l'habillage au corps en laissant l'habillage subir une détente élastique partielle jusqu'à ce qu'il s'appuie élastiquement sur les avant-pistes (18, 58) de façon qu'une face extérieure polie de l'habillage constitue les pistes (7, 47).

19. Procédé selon la revendication 18, caractérisé en ce que pour contraindre l'habillage, on réduit le rayon de courbure (R') d'une partie au moins de l'habillage (19, 39, 49, 59), et, lors de la détente élastique partielle, on laisse cette partie s'appuyer contre une face intérieure concave (17, 57) du corps (13).

20. Procédé selon l'une des revendications 18 ou 19, caractérisé en ce qu'on positionne axialement l'habillage (19, 29, 49, 59) au moyen de languettes (22) portées par l'habillage, qui s'appuient sur des faces (26, 27) du corps adjacentes aux extrémités des avant-pistes (18).

21. Procédé selon l'une des revendications 18 ou 19, caractérisé en ce qu'on positionne axialement l'habillage (39, 59) en engageant des bossages (36) du corps (13) dans des évidements correspondants (32) ménagés dans l'habillage.

22. Procédé selon la revendication 18, caractérisé en ce que pour contraindre l'habillage (29, 49), on écarte une région (31) de l'habillage qui a un profil en épingle à cheveux reliant deux pistes (7), et lors de la détente élastique partielle on laisse se refermer élastiquement cette région (31) de manière qu'elle pince une crête (14) sur laquelle sont adossées deux avant-pistes (18) du corps (13).

23. Procédé selon la revendication 22, caractérisé en ce qu'on utilise comme habillage des fourrures (29) recouvrant chacune une crête longitudinale (14) du corps (13) et deux avant-pistes (18) adossées à cette crête.

24. Procédé pour réaliser un élément (6) ayant des pistes de coulissement axiales réparties circonférentiellement (7, 47), en particulier pour joint de transmission articulé télescopique, dans lequel on réalise un corps (13) présentant des avant-pistes (18, 58) ayant un profil transversal conforme à celui des pistes de coulissement à réaliser, caractérisé en ce qu'on réalise le corps par moulage, et en ce que, avant l'opération de remplissage du moule (71), on contraint par flexion élastique circonférentielle et on présente en regard de surfaces (75) du moule correspondant aux avant-pistes (18, 58) un habillage (89, 99) en feuillard élastique poli ayant au repos, avant montage, un profil transversal voisin de celui de régions du corps (13) comprenant les avant-pistes (18, 58), et on fixe l'habillage auxdites surfaces du moule en laissant l'habillage subir une détente élastique partielle jusqu'à ce qu'il s'appuie élastiquement sur ces surfaces (75), puis on remplit le monde avec la matière destinée à constituer le corps et on laisse s'opérer une prise au moins partielle de la matière et une adhérisation concomitante de celle-ci avec l'habillage, de façon qu'après démoulage du corps muni de l'habillage une face extérieure polie de l'habillage constitue les pistes (7, 47).

25. Procédé selon la revendication 23, caractérisé en ce que pour contraindre l'habillage, on augmente le rayon de courbure (R') d'une partie au moins (21) de l'habillage (89, 99), et, lors de la détente élastique partielle, on laisse cette partie s'appuyer contre une face convexe (75) du moule (71).

26. Procédé selon l'une des revendications 24 ou 25, caractérisé en ce qu'on forme sur l'habillage, avant son montage sur les surfaces (75) du moule, des évidements (32) dans lesquels, lors du moulage, la matière du corps forme des bossages (36) de solidarisation entre le corps (13) et l'habillage (89, 99).

27. Procédé selon l'une des revendications 24 à 26, caractérisé en ce qu'on positionne dans le moule (71) un bout d'arbre muni de conformations de retenue axiale et circonférentielle (87), et en ce qu'on surmoule le corps (13) sur ce bout d'arbre.

28. Procédé selon l'une des revendications 24 à 27, caractérisé en ce qu'on utilise un feuillard qui est dépoli sur la face opposée aux surfaces (75) du moule.

29. Procédé selon l'une des revendications 18 à 21 et 24 à 28, caractérisé en ce qu'on utilise comme habillage des fourrures (19, 39, 89) recouvrant chacune, sur le corps, deux avant-pistes (18) et une région de liaison (17) qui définissent ensemble un alvéole (16) en contre-dépouille sur une paroi périphérique du corps (13).

30. Procédé selon l'une des revendications 18 à 21 ou 24 à 28, caractérisé en ce qu'au moyen de l'habillage (49, 59, 99) réalisé en une seule pièce, on recouvre sur le corps (13) sensiblement la totalité d'une paroi périphérique comprenant les avant-pistes (18).

31. Procédé selon la revendication 30, caractérisé en ce que pour réaliser l'habillage on part d'une bande de feuillard continue, on forme les pistes (7, 47) par cintrage local de cette bande continue, on la coupe pour obtenir un tronçon, puis on cintre des régions (21) du tronçon situées entre les pistes (7, 47) pour rapprocher l'une de l'autre les deux extrémités (93) du tronçon et obtenir ainsi l'habillage.

32. Procédé selon la revendication 31, caractérisé en ce qu'avant de couper la bande, on cintre les régions (21') situées entre les pistes (47) dans un premier sens contraire à celui du cintrage d'une même région (21) après que la bande a été coupée.

33. Procédé selon l'une des revendications 18 à 32, caractérisé en ce qu'on donne à l'habillage (19, 29, 39, 49, 59), au repos avant montage, pour les pistes (7, 47), un rayon de courbure qui correspond à celui des pistes après montage, et pour des régions autres que les pistes (21, 31), un rayon de courbure différent de celui qu'auront lesdites régions lorsque l'habillage sera en place sur le corps.

34. Procédé selon l'une des revendications 18 à 33, caractérisé en ce qu'on réalise l'habillage à partir de feuillard terminé par une opération de laminage à froid.

FIG. 1

FIG. 2

FIG_3

FIG_4

FIG_5

FIG_6

FIG_7

**FIG. 8**

**FIG. 9**

**FIG. 10**

**FIG. 11**

**FIG. 12**

FIG_13

FIG_17

38
39
7
7
14
14
7
7
7
31
31
13
6
22
22
R
17
26
31
21
21
18
22
14
7
37
37
58
58
13
58
Z
57
58

EP 0 477 074 A1

37'
7
7
21'
31
7
7
39'
21'
31
44
7
7
39"
22
22
22
37'

FIG_14

FIG.15

FIG.16

FIG.18

FIG_19

E'

89    32    21

r    7    R'    7

FIG_22

93    47

47    47

47    99

47    21

21    47    47

32    32

93

93

FIG_23

47

47

47

99

47

72

73

EP 0 477 074 A1

FIG. 21

FIG. 20

FIG_25

FIG_24

EP 0 477 074 A1

Office européen
des brevets

**RAPPORT DE RECHERCHE EUROPEENNE**

Numero de la demande

EP 91 40 2440

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 580 751 (GLAENZER SPICER)<br>* En entier *<br>--- | 1,2,6,9,10 | F 16 D 3/20 |
| Y | FR-A-1 442 969 (SCHAEFFLER)<br>* En entier *<br>--- | 1,2,6,9,10 | |
| A | US-A-2 194 798 (KOPPEL)<br>* Page 2, figures 4,5 *<br>--- | 4,10-12,14,24,30-34 | |
| A | DE-A-1 903 600 (BOOTHBY)<br>* En entier *<br>--- | 18,22,23 | |
| Y | FR-A-2 628 803 (GLAENZER SPICER)<br>* En entier *<br>--- | 1,2,6,9,10 | |
| Y | FR-A-1 442 991 (SCHAEFFLER)<br>* En entier *<br>--- | 1,2,6,9,10 | |
| A | FR-A-1 352 259 (CITROEN)<br>* En entier *<br>--- | 4,6,10,11,14 | DOMAINES TECHNIQUES RECHERCHES (Int. Cl.5) |
| A | FR-A-2 169 450 (GLAENZER SPICER)<br>* Page 4, figures 15,16 *<br>--- | 11,12,24,30-34 | F 16 D 3/00 |
| A | EP-A-0 335 781 (GLAENZER SPICER)<br>* En entier *<br>--- | 10-12,22-24,30-34 | |
| A | US-A-2 057 875 (BENHAM)<br>* En entier *<br>--- | 4,6,10,14 | |
| A | EP-A-0 034 073 (CITROEN)<br>* En entier *<br>----- | 22,23 | |

Le présent rapport a été établi pour toutes les revendications

| Lieu de la recherche | Date d'achèvement de la recherche | Examinateur |
|---|---|---|
| LA HAYE | 30-10-1991 | BALDWIN D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)